# EUROPÄISCHE PATENTSCHRIFT

(11) **EP 2 646 265 B1**
(45) Veröffentlichungstag und Bekanntmachung des Hinweises auf die Patenterteilung: **18.07.2018**
(21) Anmeldenummer: 11796620.0
(22) Anmeldetag: 26.11.2011
(51) Int. Cl.: B60D 1/167, B60D 1/32, B60B 33/00

(54) **EINACHSIGER ANHÄNGER FÜR EINEN PERSONENKRAFTWAGEN**
SINGLE-AXLE TRAILER FOR A PASSENGER VEHICLE
REMORQUE À UN SEUL ESSIEU POUR UNE VOITURE PARTICULIÈRE

(30) Priorität: 01.12.2010 DE 202010016076 U; 01.12.2010 DE 202010016089 U; 24.08.2011 DE 202011104769 U
(43) Veröffentlichungstag der Anmeldung: 09.10.2013
(73) Patentinhaber: Laumann, Wilfried, 9320 Arbon (CH)
(72) Erfinder: Laumann, Wilfried, 9320 Arbon (CH)
(74) Vertreter: Busse & Busse
(86) Internationale Anmeldenummer: PCT/EP2011/005950
(87) Internationale Veröffentlichungsnummer: WO 2012/072224

(56) Entgegenhaltungen:
- GB-A- 2 376 453
- GB-A- 2 379 639
- GB-A- 2 398 052
- JP-A- 60 183 272
- US-A- 4 603 876
- US-A- 5 335 856

## Beschreibung

Die Erfindung betrifft einen einachsigen Anhänger für einen Personenkraftwagen o. dgl. Zugfahrzeug gemäß dem Oberbegriff des Anspruchs 1. Derartige einachsige Anhänger sind insbesondere als Ladeplattform, Zeltanhänger, Wohnmobil o. dgl. Transporter von Campingzubehör vorgesehen.

Einachsige Anhänger sind seit langem bekannt, wobei gemäß GB 537,092 (1940) im Bereich einer Anhängevorrichtung jeweilige in Fahrtrichtung parallele Stützträger vorgesehen sind, so dass durch jeweilige an diese angreifende Stellelemente ein seitlicher Versatz des Anhängers beim Fahren ausgleichbar ist. Ein Wohnwagen gemäß DE 22 62 194 (1972), der an einen Personenkraftwagen mittels einer Anhängekupplung ankoppelbar ist, weist eine V-förmige Deichsel auf, die durch zusätzliche zu deren Schenkel parallele Blattfedern so erfasst wird, dass das Führungsverhalten für den Anhänger verbessert ist. Eine Verbesserung bei Kurvenfahrten des Anhängers wird gemäß US 3,787,068 (1974) dadurch erreicht, dass die Anhängekupplung zwei Gelenkarme mit jeweiliger Kugelkopfkupplung aufweist. Bei einer Anhängekupplung gemäß DE 27 21 914 wird zur Stabilisierung einer Teleskop-Verbindungsdeichsel eine zusätzliche Abstützung mittels jeweiliger nach Art von Pleuelstangen zusammenwirkender Verbindungselemente erreicht. Bei einer Anhängekupplung gemäß US 4,076,264 (1978) wird der Fahrzeugrahmen mit zumindest zwei parallelen Kugelkopf-Kupplungen versehen, so dass die entsprechenden Gegenglieder am Anhänger direkt mit dem Fahrzeugrahmen verbunden sind.

Bei einem Einachsanhänger gemäß EP 0 054 882 B1 (1981) sind zwei Lenker vorgesehen, die zwischen jeweiligen am Fahrzeugrahmen und am Rahmen des Anhängers vorgesehenen Kugelkupplungen wirken. Eine ähnliche Kupplungsverbindung für einen Einachsanhänger ist in EP 0 132 702 B1 (1984) gezeigt.

Bei einer gemäß WO 95/04668 (1995) gezeigten Konstruktion wird die V-förmige Zugdeichsel durch zwei parallele Führungsstangen einer Zusatzstützvorrichtung unterstützt. In WO 00/56588 (2000) ist zur Unterstützung der Zugdeichsel eine seitliche Lenkkonstruktion vorgesehen, in DE 100 54 762 C2 (2000) wirkt die Anhängerdeichsel mit einer Gestängebaugruppe zusammen, die ein Bremssystem aktiviert, und bei einer Kupplungsvorrichtung gemäß EP 1 022 165 B1 wird die Deichsel mit einer Trapez-Konstruktion versehen, um den Anhänger spurgenau zu steuern. In DE 600 07 182 T2 (2006) wird eine Anhängedeichsel vorgeschlagen, die zur Spurkorrektur ebenfalls mit einer ein Basisteil und zwei Seitenteile aufweisenden Trapez-Konstruktion als Zusatzbaugruppe versehen ist. In EP 1 837 209 A1 (2007) ist ein Kupplungssystem für einen Ackerschlepper gezeigt, wobei ebenfalls mehrere Kugelköpfe als gemeinsame Stützteile vorgesehen sind. Auch bei einer Niederhaltevorrichtung gemäß EP 1 995 085 A1 (2008) wird eine zentrale Kupplungskugel mit zwei eine Zwangslenkung bewirkenden zusätzlichen Kupplungsteilen kombiniert. In US 4,106,794 (1978) ist eine an den Kraftwagen ansteckbare Kupplungsvorrichtung gezeigt, die zur Aufnahme eines Wohnanhängers jeweilige an dieser vorgesehene Deichselstreben erfassende Kugelkupplungsteile aufweist. Eine ähnliche, gattungsbildende Konstruktion ist in DE 69 10 947 (1969) für einen einrädrigen Anhänger vorgeschlagen, wobei mehrere Kupplungsstellen im Bereich eines Zwischengliedes vorgesehen sind.
Bei einem einachsigen Anhänger in DE 32 22 602 A1 wird eine Konstruktion mit nur einem an einem Drehkranz schwenkbar gelagerten Laufrad vorgeschlagen. Auch US 4,426,097 zeigt eine derartige Ein-Rad-Konstruktion im Bereich eines Anhängers. Bei einem einachsigen Anhänger gemäß US 4,512,593 werden zwei schwenkbare Laufräder durch einen Kettenantrieb verbunden. Aus US 4,664,403 ist eine Anhängevorrichtung zu entnehmen, bei der zwei symmetrisch zur Längsmittelebene des Anhängers vorgesehene Kugelkupplungen den Anhänger erfassen und von diesen Kugelkupplungen aus eine Stützkonstruktion an den Fahrzeugrahmen und eine zweite Stützkonstruktion an die Stoßstange des Fahrzeugs geführt sind. Dabei wird eine Doppel-Kugel-Kupplung mit einem Anhänger verbunden, an dessen hinterem Bereich zwei Laufräder drehbar abgestützt sind. Zur besseren Steuerung eines derartigen Ein-Achs-Anhängers wird in EP 2 202 102 A2 eine spezielle Halterung mit Bremse vorgeschlagen.

Gemäß GB 2 379 639 A, die den Oberbegriff des Anspruchs 1 zeigt, wird eine Ladeplattform zur Verbindung mit einem Zugfahrzeug mit einem zusätzlichen Lastträger im Bereich des Kugelkopfes versehen, und an der Rückseite der Tragplatte ist ein nach hinten überstehendes Stützrad vorgesehen, so dass damit Flatterbewegungen vermieden werden. Das Stützrad ragt weit ab und ist mit einer aufwändigen Tragarmkonstruktion an der Tragplatte gehalten. In GB 2 389 052 A wird eine an der Radachse des Anhängers angreifende Zwei-Arm-Abstützung gezeigt, und die Lösung gemäß US 4 603 876 A zeigt eine Stangenkonstruktion mit V-Streben. Aus JP 60183272 ist ein Ein-Achs-Anhänger mit unter dem Tragrahmen vorgesehenen Stützrad zu entnehmen, wobei zwei V-förmige Streben mit Kugelkopf die Verbindung zum Zugfahrzeug bilden.
Die Erfindung befasst sich mit dem Problem, einen von einem Personenkraftwagen o. dgl. Zugfahrzeugen gezogenen Anhänger zu schaffen, wobei eine zwischen Anhänger-Rahmen und Kupplungsträger zusätzlich zur Standard-Kupplungsvorrichtung vorgesehene Verbindung mit geringem technischem Aufwand und vergleichsweise einfachen Bauteilen eine optimale Führung bewirkt, derart, dass diese nachrüstbare Zusatzbaugruppe eine Aufnahme von Bewegungen des Anhängers bzw. dessen Stützräder weitgehend ohne Beeinflussung der Kugelkupplungsteile des Zugfahrzeugs ermöglicht.
Die Erfindung löst diese Aufgabe mit einem eine Kupplungsvorrichtung gemäß dem Anspruch 1 aufweisenden Anhänger. Weitere vorteilhafte Ausgestaltungen des Anhängers ergeben sich aus den Ansprüchen 2 bis 38.

Der einachsig ausgebildete Anhänger weist in erfindungsgemäßer Ausführung als Zwischenglied einen Profilträger auf, der mittels zweier paralleler Halteschenkel den Basis-Rahmen des Anhängers erfasst und über zwei als funktionale Baugruppen vorgesehene Loslager-Kupplungspunkte optimal mit einer als Standardbauteil vorgesehenen Kugelkopf-Kupplung am Heck des Kraftwagens zusammenwirkt. Diese vergleichsweise einfache und kompakt bauende Einheit ist als nachrüstbares Montage-Set so konzipiert, dass eine auch unter schwierigen Fahrbedingungen optimale Abstützung des "Leichtbau-Anhängers" erreicht ist und das insgesamt ein geringes Gewicht aufweisende System durch fertigungstechnisch einfach herstellbare Einzelkomponenten komplettiert wird.
Bei geringer Störanfälligkeit kann dieses kompakte System insgesamt mit geringen Gestehungskosten bereitgestellt und installiert werden. Aufbauend auf diesem Grundkonzept wird ein für die besonderen Einsatz-Bedingungen des Camping- und Caravan-Bereiches geeigneter und als effektives Zubehör einsetzbarer Anhänger mit Zwischenglied bereitgestellt, so dass auf der Rahmen-Struktur des Anhängers eine variable Vielfalt von Stütz- und Tragbauteilen montierbar ist und vergleichsweise hohe Beanspruchungen fahrtechnisch sicher aufnehmbar sind.

Die Konstruktion mit dem die Kupplungsstellen bildenden Profilträger ist dabei in den funktionalen Verbindungsbereichen mittels der als formschlüssige Verbinder "lose" ineinandergreifenden Kupplungspunkte so optimiert, dass Kippbewegungen des Anhängers in Fahrtrichtung ausgleichbar und quer zur Fahrtrichtung auftretende Versatzbewegungen beschädigungsfrei ableitbar sind. Dabei ist als zusätzlicher Schutz zwischen dem Profilträger sowie dem Fahrzeugrahmen die "lose" Anordnung mit zwei parallelen Führungsgliedern bzw. Gegenhaltern als die Loslagerbauteile vorgesehen, so dass diese bei Kurvenfahrten auch eine zusätzliche Anschlagsicherung bewirken. Damit wird im Bereich der Loslage eine Verbindung definiert, bei der ein Freiheitsgrad in Form von Translationsbewegungen quer zur Fahrtrichtung fixiert ist, dieser gleichzeitig Drehmomente um eine - gedachte - Querachse zulässt, und bei der geringe Verschiebungen in bzw. entgegen der Fahrtrichtung aufnehmbar sind, derart, dass zwei Freiheitsgrade im Bereich der Loslager wirksam bleiben.

Die Einzelteile der Leichtbaugruppe im Bereich der Profilträger-Kupplung werden dabei mit dem Basis-Rahmen des Anhängers und dem Fahrzeugrahmen weitgehend kraft- und formschlüssig so verbunden, dass bei einer bodenseitigen Abstützung des Anhängers mittels eines Stützrades bzw. zweier paralleler Stützräder jeweils die Wendigkeit des Systems erhalten bleibt. Dabei ist vorgesehen, dass die Räder mittels jeweils einer eine vertikale Schwenkachse definierenden Stützvorrichtung am Basis-Rahmen gehalten sind und damit im Bereich der Räder auch 360°-Drehungen möglich sind.

Der als einstückiges Zwischenglied vorgesehene Profilträger ist dabei vorteilhaft aus einem die vorderseitigen Loslager aufweisenden Stangen-Halbzeug gebildet, das auch als ein Gewicht sparendes Hohlprofil ausgeführt werden kann. Im Bereich der zwischen den beiden Loslagern vorgesehenen und aus standardisierten Kupplungs-Bauteilen bestehenden Kugelkopfkupplung ist dabei eine den mittleren Bereich des Profilträgers erfassende Halterung vorgesehen. Der Profilträger ist dabei im Bereich der rückseitigen Verbinder zum Basis-Rahmen des Anhängers hin vorteilhaft mit jeweiligen eine Steckverbindung mit auswählbaren Stützlagern definierenden Baugruppe versehen, die beispielsweise die Aufnahme in einer von mehreren Stecköffnungen ermöglicht oder eine stufenlos wählbare Verbindungsbereiche vorgebende Haltenut aufweist.

Für die zusätzliche Fixierung des Profilträgers im Bereich der beiden Loslager können die von diesen ausgehenden Gegenhalter mit dem Kraftwagen bzw. dessen Fahrzeugrahmen im Bereich eines die Kugelkopfkupplung zentral aufnehmenden Zusatzrahmens verbunden sein. In zweckmäßiger Ausführung sind die als Stabilisatoren wirkenden Halter am Profilträger in Form von eine parallel zur Längsmittelebene verlaufende Wirkebene aufweisenden Führungsstangen ausgebildet, die anderenends in ein rahmenfestes Gegenlager formschlüssig eingreifen. Dabei sind die Längs- und Querschnittsprofile von Führungsstange und Gegenlager so optimiert sind, dass jeweilige vom Anhänger ausgehende Kipp- bzw. Schwenkbewegungen des Systems auch durch elastische Verformung aufnehmbar sein können und damit Überbelastungen im Bereich der zumindest einen Freiheitsgrad aufweisenden Loslager vermieden werden.

Der Bereich der Loslager ist erfindungsgemäß so ausgeführt, dass der Verbindungsbereich von Führungsstange mit Gegenlager eine nach Art einer Nut-Führung bewegliche Abstützung definiert, derart, dass mit der in der Nut-Führung des Gegenlagers beweglichen Führungsstange zumindest Schwenk-, Schub- und/oder Hubbewegung - insbesondere bei einer vertikalen Verlagerung des Anhängers relativ zum Zugfahrzeug - ausgleichbar sind und in jeder Bewegungsphase die optimale Führung des Anhängers gewährleistet ist. Diese bewegliche Abstützung ist vorteilhaft im Bereich der zum Fahrzeugrahmen des Kraftwagens gerichteten Verbindungszonen bzw. deren Loslager vorgesehen, wobei eine derartige bewegliche Abstützung - zusätzlich zur zentralen Kugelkopfkupplung - auch bereits mit jeweiligen in vertikalen Langlöchern verlagerbaren und einen Bewegungsspalt belassenden Steckelementen o. dgl. Baugruppen gebildet werden kann.

Die Baugruppen im Bereich der Loslager sind dabei so aufgebaut, dass mit geringem Raumbedarf zusätzlich ein variabel positionierbares Anlageteil für die Führungsglieder in den Bereich der Führungskontur integriert werden kann. Diese Anlageteile greifen dabei jeweils in den Bewegungsbereich der am Profilträger vorgesehenen Führungsglieder ein, so dass deren Verlagerungsmöglichkeiten zumindest bereichsweise eingeschränkt sind und damit die Verlagerungswege des Anhängers auf ein optimales Maß begrenzt werden.

Bei einachsigen und mit zumindest einem Stützrad ausgebildeten Anhängern ist zur Kupplung mit einem Zugfahrzeug eine an sich bekannte Deichsel-Verbindungsbaugruppe vorgesehen, die dadurch verbessert wird, dass ein zusätzlicher Schwenkschutz in diese Verbindungsstruktur integriert ist. Es hat sich gezeigt, dass bei bekannten Deichsel-Verbindungen mit Kugelkopf, Verbindungsöse o. dgl. Zugverbindern eine wenig sichere Führung des Anhängers bei Rückwärtsfahrt dann erfolgt, wenn der Basis-Rahmen des Anhängers mit um eine Hochachse schwenkbaren Stützrädern versehen ist, wobei diese in Fahrtrichtung "nachlaufend" ihrer jeweiligen vertikalen Stützachse angeordnet sind.

Der Basis-Rahmen dieser bekannten Anhänger wird mit nachlaufenden Stützrädern an eine optimale bzw. maximale Aufnahme von Nutzlasten so angepasst, dass auch bei vergleichsweise hohen Gewichtsbelastungen der Anhängerschwerpunkt so nach hinten verlagert ist, dass die Gewichtsbelastung im Bereich der vorderen Deichsel-Verbindung ein verkehrstechnisch zulässiges Maß nicht überschreitet. Mit dieser Anordnung der "nachlaufenden" Stützräder mit schwenkbarer Abstützung sind optimale Fahreigenschaften bei Geradeausfahrt und Kurvenfahrt gewährleistet. Jedoch ergibt sich bei Phasen mit Rückwärtsfahrt das Problem an den Anhängern, dass mit deren dann um z. B. 180° geschwenkten Stützrädern auch der Anhängerschwerpunkt in Bezug auf den Rollpunkt der Stützräder verlagert sein kann. Aus dieser geänderten Gewichtsverteilung kann dann im Bereich der "normalen" Kugelkopf-Kupplung ein Hochschwenken des Anhängers bzw. der Deichsel-Verbindung resultieren, so dass die Zulademöglichkeiten auf den einachsigen Anhänger begrenzt sind.

Zur Lösung dieses Problems wird bei dem erfindungsgemäßen Anhänger der zusätzliche Schwenkschutz in den Bereich der Deichsel-Verbindung integriert, so dass dieser Bereich bzw. der Anhänger gegen ein Hochschwenken für Rückwärtsfahrten gesichert ist. Für diesen Schwenkschutz ist mit konstruktiv geringem Aufwand ein zusätzlicher Anlagepunkt im Bereich der mechanischen Verbindungsteile vorgesehen, so dass diese zur Aufnahme des durch die Schwerpunktverschiebung erzeugten Drehmomentes geeignet sind. Dabei wird das aus der "Verdrehung" der Stützräder um die Hochachse resultierende Kippmoment durch den zumindest jetzt aktivierten Schwenkschutz aufgenommen, so dass eine Einleitung des Momentes in die Deichsel-Baugruppe bzw. den vorgelagerten Fahrzeugrahmen erreicht ist und der Anhänger bei Rückwärtsfahrt sicher geführt wird. Damit wird für einen einachsigen Anhänger - mit den schwenkbaren, "nachlaufenden" Stützrädern - eine einfache und überraschend effiziente Bauteilkombination in das Anhänger-Konzept integriert, mit dem ein sicherer Transport auch größerer Nutzlasten möglich wird. Eine zusätzliche Bremse im Bereich der Stützräder ist bei Anwendung des erfindungsgemäßen Schwenkschutzes entbehrlich.

Der zusätzliche Schwenkschutz kann bei einachsigen Anhängern mit drehbaren Stützrädern so in die Deichsel-Baugruppe integriert sein, dass zusätzlich zu der Kugel-, Ösen- oder Steckverbindung eine Leit- und Sicherungsfunktion durch zusammenwirkende Anlageteile erreicht wird. Diese Bauteile können dabei so mit den Deichsel-Teilen kombiniert sein, dass bei Herstellung der "normalen" Kupplungsverbindung zwischen dem Zugfahrzeug und dem Anhänger gleichzeitig auch - weitgehend automatisch bzw. "zwangsläufig" - der zusätzliche Schwenkschutz hergestellt bzw. die Sicherungsbauteile in Funktionslage gebracht werden.

Für den Fall, dass im Bereich der Deichsel-Verbindungsbaugruppe neben der Kugelkopf-Verbindung weitere Kupplungspunkte, z.B. im Bereich eines streben- oder balkenförmigen Zwischengliedes, vorgesehen sind, kann zumindest der eine Schwenkschutz auch im Bereich dieser Bauteile optimal angeordnet werden.

Eine dritte Ausführung des verbesserten einachsigen Anhängers ist im Bereich zwischen Basis-Rahmen und zumindest einer das jeweilige Rad aufnehmenden Stützvorrichtung mit zumindest einer - zusätzlich zu deren vertikalem Stützlager wirksamen - Abstützung in Form einer "belastungsabhängig" herstellbaren und damit vorteilhaft nur phasenweise wirksamen Anlageverbindung versehen. Diese konstruktiv variabel ausführbare Anlageverbindung definiert mittels zumindest eines Anpressteils und eines Gegengliedes einen zusätzlichen Abstützungsbereich für das gemeinsam mit der Stützvorrichtung schwenkbare Rad.

Damit wird erreicht, dass bei hohen Belastungen des Basis-Rahmens - durch eine hohe Traglast und/oder schlagartige Verlagerung des Rades durch Bodenunebenheiten o. dgl. - jeweilige resultierende Stützkräfte im Bereich des Stützlagers zusätzlich über diese Anlageverbindung in den Basis-Rahmen eingeleitet werden können und damit die Langzeitstabilität im Bereich des "entlastbaren" Stützlagers verbessert werden kann. Dabei kann die Anpressteil-Gegenglied-Baugruppe nach Art einer "Scheibenbremse" insbesondere so wirksam sein, dass nachteilige Kippbewegungen im Bereich der vertikalen Schwenkachse des Stützlagers vermieden sind.

Während eines weitgehend unbelasteten Fahrzustands des Anhängers und dessen Bewegung auf im wesentlichen ebenen Fahrbahnen ist die nur im Bedarfsfall "automatisch" herstellbare Anlageverbindung dadurch außer Betrieb, dass zwischen dem Anpressteil und dem Gegenglied ein in seinen Abmessungen an die jeweilige Konstruktion und Größe des Basis-Rahmens anpassbarer Luftspalt verbleibt. Dabei ist vorgesehen, dass geringe Stoßbelastungen auf das System mittels einer üblicherweise vorgesehenen Schwinge und eines Dämpfers aufgenommen bzw. in das zwei Schenkel aufweisende Tragbauteil der Stützvorrichtung eingeleitet werden können. Über eine die radialen Schwenkbewegungen der Stützvorrichtung um die vertikale Schwenkachse zulassende Lagerbaugruppe werden diese "normalen" Kräfte optimal abgeleitet. Insbesondere für den Fall, dass das vorbeschriebene Rad-AufhängungsSystem Überbelastungen erfährt, kann die erfindungsgemäße Anlageverbindung einen zusätzlichen Schutz der Lagerbaugruppe im Bereich der Stützvorrichtung bewirken, derart, dass ein langzeitig stabiler Einsatz des "doppelten" Systems auch bei häufigen Belastungswechseln im Fahrbetrieb des beladenen Anhängers gewährleistet ist und damit der Anhänger mit verbesserter Sicherheit einsetzbar ist.

Das Konzept der zusätzlichen Anlageverbindung sieht vor, dass bei dieser auch mehrere Anpressteile und/oder Gegenglieder in das System integriert sein können. Dabei kann durch ein oder mehrere zumindest im wesentlichen elastische Dämpfungselemente auch eine "gestuft" belastungsabhängig zunehmende Anpressung möglich sein, derart, dass bei größer werdenden Kraft- bzw. Druckeinleitungen zwischen Rad und Rahmen nacheinander mehrere der als Dämpfungselemente ausgebildeten Anpressteile in Abstützungseingriff an dem zumindest einen Gegenglied gelangen.

Das Anpressteil ist in zweckmäßiger Ausführung als ein an der Stützvorrichtung fixierbarer Zylinderkörper geformt, wobei dessen freie Stirnseite an dem eine radiale Stützbahn definierenden Gegenglied anlegbar ist. Dieses Gegenglied kann als eine Stützplatte ausgebildet sein, an deren Unterseite der Zylinderkörper reibschlüssig anlegbar ist. Ebenso ist denkbar, dass als Gegenglied eine Ringplatte vorgesehen ist, so dass über eine vollständige 360°-Drehung eine Press-Anlage des Zylinderkörpers an der Unterseite der Ringplatte möglich ist. Als das plattenförmige Gegenglied kann auch ein Ringabschnitt vorgesehen sein, wobei dieser beispielsweise an den in einem 180°-Bogen beabstandeten Enden mit jeweils einem Anschlag versehen sein kann, so dass der Schwenkbereich der Stützvorrichtung bzw. des Rades entsprechend begrenzt wird.

Weitere Einzelheiten und vorteilhafte Ausgestaltungen der Erfindung ergeben sich aus der nachfolgenden Beschreibung und der Zeichnung, in der mehrere Ausführungsbeispiele des erfindungsgemäßen Anhängers mit Kupplungssystem und Stützrädern näher veranschaulicht sind. In der Zeichnung zeigen:
- Fig. 1: eine perspektivische Unteransicht eines zwei Stützräder aufweisenden einachsigen Anhängers mit erfindungsgemäßen Kupplungsteilen zum Bereich des Zugfahrzeugs hin,
- Fig. 2: eine perspektivische Darstellung des einachsigen Anhängers mit dem erfindungsgemäßen Zwischenglied im Bereich der Kupplungsbaugruppe,
- Fig. 3: eine vergrößerte Einzeldarstellung des zwischen Anhänger und Zugfahrzeug vorgesehenen Profilträgers mit Loslagern,
- Fig. 4: eine vergrößerte Einzeldarstellung eines am Profilträger vorgesehenen Führungsgliedes des Loslagers,
- Fig. 5: eine vergrößerte Einzeldarstellung eines Gegengliedes des Loslagers,
- Fig. 6: eine Einzeldarstellung eines Stützrades mit Haltevorrichtung in Seitenansicht,
- Fig. 7: eine Stirnansicht des Stützrades gemäß Fig. 6,
- Fig. 8: eine vergrößerte Einzeldarstellung des Stützrades im Bereich eines oberen Schwenklagers mit Reibbremse,
- Fig. 9: eine Seitenansicht des Anhängers mit Profilträger und einem im Bereich der vorderen Führungsglieder vorgesehenen Anlageteil,
- Fig. 10: eine Perspektivdarstellung ähnlich Fig. 3 mit jeweiligem Anlageteil im Bereich beider Kupplungspunkte,
- Fig. 11: eine vergrößerte Ausschnittsdarstellung im Bereich eines der Kupplungspunkte mit zusätzlichem Anlageteil,
- Fig. 12: eine Explosivdarstellung mit im Bereich der Anlageteile vorgesehenen Einzelkomponenten,
- Fig. 13: eine Seitenansicht einer zweiten Ausführung des Anhängers ähnlich Fig. 9,
- Fig. 14: eine Perspektivdarstellung einer dritten Ausführung des Anhängers mit zwei Stützrädern ähnlich Fig. 2,
- Fig. 15: eine Draufsicht des Anhängers gemäß Fig. 14 mit einer Anlageverbindung im Bereich der Stützräder,
- Fig. 16: eine teilweise vergrößerte Ausschnittsdarstellung des Anhängers gemäß Fig. 14 im Bereich einer das Stützrad aufnehmenden Stützvorrichtung, und
- Fig. 17: eine Rückansicht des Anhängers gemäß Fig. 14.

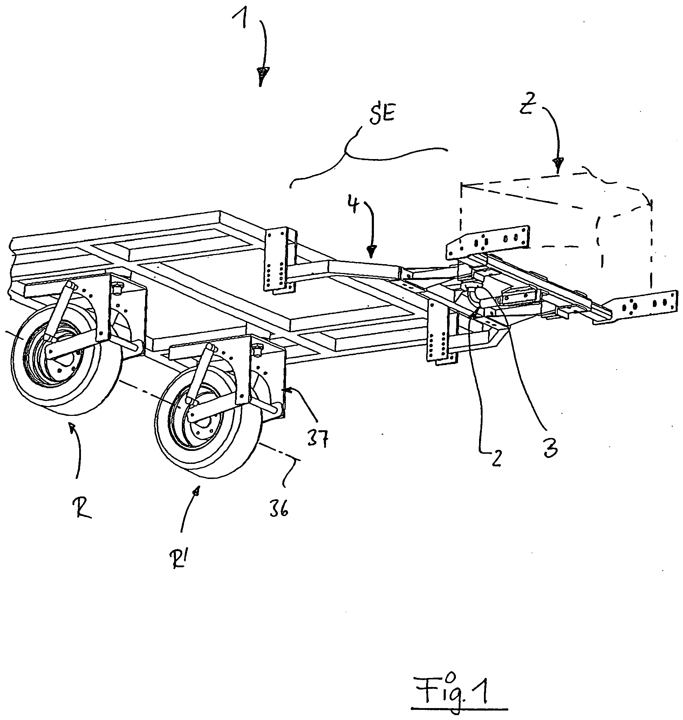

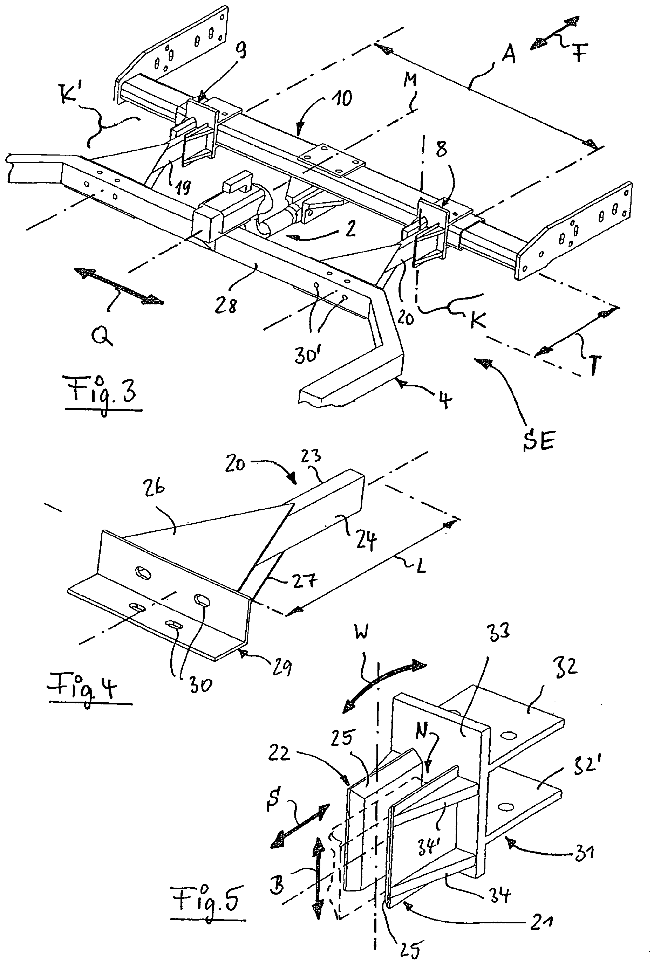

In Fig. 1 ist ein insgesamt mit 1 bezeichneter Anhänger für einen nicht näher dargestellten Kraftwagen o. dgl. Zugfahrzeug Z dargestellt, wobei an dessen einen Kugelkopf 3 aufweisenden Kugelkupplung 2 (Fig. 3) der Anhänger 1 mittels eines insgesamt mit SE bezeichneten Zwischengliedes festlegbar ist (DE 69 10 947). Bekannt ist auch, dass ein derartiges Zwischenglied SE zusätzlich mit zumindest zwei im Abstand voneinander angeordneten, vorzugsweise beidseits der Längsmittelebene M des Kraftwagens Z sowie des Anhängers 1 vorgesehenen Kupplungspunkten K, K' versehen sein kann (DE 22 62 194 A1; US 4,664,403; DE 101 44 597 A1; US 3,033,593).

Der einachsige Anhänger ist erfindungsgemäß mit einer Kupplungskonstruktion versehen, die als Zwischenglied SE einen Profilträger 4 aufweist, der einerseits mit zwei parallelen Halteschenkeln 5, 6 zum Basis-Rahmen 7 des Anhängers 1 geführt ist und andererseits die beiden Kupplungspunkte K, K' mit jeweiligen Loslagern 8, 9 zu einem Querträger 10 des Fahrzeugrahmens hin bildet. Damit wird mittels der beiden zwischen dem Profilträger 4 sowie dem Fahrzeugrahmen 10 vorgesehenen Loslagern 8, 9 für den einachsigen Anhänger 1 zum Kraftfahrzeug Z hin eine optimale Fahrführung mit Anschlagsicherung gebildet.

Diese Loslager-Konstruktion zeichnet sich dadurch aus, dass zusätzlich zur im Bereich der zentralen Kugelkupplung 3 erfolgenden Zugkraft- und Bewegungseinleitung jeweilige Schwenk-, Schub- und/oder Hubbewegungen W, S, B (Fig. 5) im Bereich der Loslager 8, 9 aufnehmbar sind. Die jeweiligen Bauteile im Bereich dieser Loslager wirken dabei so zusammen, dass eine Verdrehung oder eine Verschiebung in Querrichtung Q (Fig. 3) vermieden sind und damit der Anhänger 1 in Fahrtrichtung optimal geführt wird. Insbesondere wird mit dieser "losen" 3-Punkt-Lagerung bewirkt, dass der Anhänger 1 sowohl eine optimale Anpassung an die Schwingungen des Systems bewirkenden Straßenzustände aufweist, als auch bei Kurvenfahrten eine optimale Abstützung (Stützabstand T, Fig. 3) zum Zugfahrzeug erfährt.

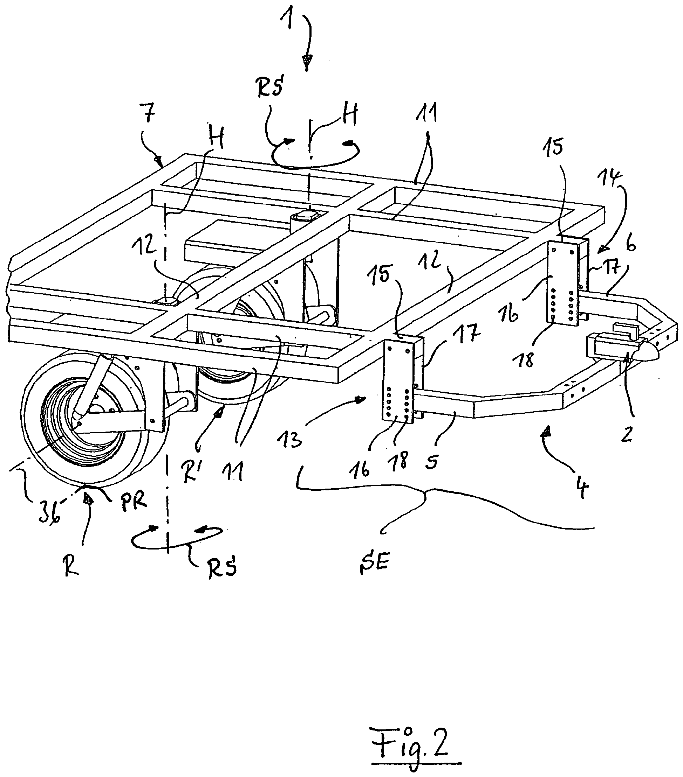

Aus der Zusammenschau gemäß Fig. 2 und Fig. 3 ergibt sich, dass der Basis-Rahmen 7 mit dem als ein Montage-Set bereitstellbaren Profilträger 4 sowie mit den Loslager-Baugruppen eine das Gewicht des Anhängersystems 1 gering haltende Leichtbaugruppe bildet. Zur Verbindung des Profilträgers 4 an jeweiligen Längs- und/oder Querstreben 11, 12 des Basis-Rahmens 7 sind jeweilige als Steck- und/oder Schraubverbinder ausführbare Baugruppen 13, 14 vorgesehen. Bei der dargestellten Konstruktion greifen die beiden Halteschenkel 5, 6 jeweils zwischen zwei an einem Tragarm 15 vorgesehene Platten 16, 17 so ein, dass in einer Reihe von übereinander angeordneten Stecköffnungen 18 die wahlweise Fixierung des Profilträgers 4 in jeweils vorteilhafter Einbauhöhe möglich ist.

Der in seiner Querkontur weitgehend variabel ausführbare Profilträger 4 ist im Bereich der beiden Loslager 8, 9 mit jeweils einem stangenförmigen Führungsglied 19, 20 (Fig. 4) versehen, das mit einem am Zugfahrzeug Z bzw. dessen Kupplungsträger 10 vorgesehenen Gegenglied zusammenwirkt. Die Zusammenschau der Darstellungen gemäß Fig. 3 bis Fig. 5 verdeutlicht, dass die beidseits am Profilträger 4 mit im wesentlichen gleicher Länge L verlaufenden Führungsglieder 19, 20 jeweils zwischen zwei eine Führungsnut N begrenzenden Anlageplatten 21, 22 des Gegengliedes einführbar und hier verlagerbar sind. Diese Führungsnut N ist in der dargestellten Ausführung beidseits offen, wobei auch ein jeweiliger endseitiger Verschluss (nicht dargestellt) der Führungsnut N denkbar ist.

Aus der Darstellung gemäß Fig. 4 wird deutlich, dass die Führungsglieder 19, 20 jeweils als Vierkantprofile ausgebildet sind, so dass jeweils zwei parallele Seitenflächen 23, 24 eine formschlüssige Verbindung bewirken und an den Anlageplatten 21, 22 des Gegengliedes (in der Nut N) gleitend anlegbar sind. Dabei ist insbesondere vorgesehen, dass die Innenseiten der Anlageplatten 21, 22 mit einem reibungs- und/oder stoßdämpfenden Belag 23 versehen ist. Ebenso ist denkbar, dass im Bereich der Führungsglieder 19, 20 ein Belag vorgesehen wird (nicht dargestellt), so dass für die dargestellten Bewegungen S, B, W im Bereich der Loslager 8, 9 optimale Anlegebedingungen bestehen und die Loslager 8, 9 langzeitig verschleißarm belastbar sind.

Aus der vergrößerten Einzeldarstellung des Führungsgliedes 20 gemäß Fig. 4 wird deutlich, dass die Führungsglieder 19, 20 mit jeweiligen zum Profilträger 4 gerichteten Verbindungsplatten 26, 27 versehen sind, mit denen eine lösbare Verbindung im Bereich der Querstrebe 28 (Fig. 4) des Profilträgers 4 möglich ist. In der dargestellten Ausführung sind die beiden Verbindungsplatten 26, 27 zu einem Haltewinkel 29 geführt, der über jeweilige Verbindungsöffnungen 30, 30' durchgreifende Verbinder (nicht dargestellt) den Querträger 28 erfasst.

Die vergrößerte Einzeldarstellung des das Führungsglied 20 im Bereich der beiden Anlageplatten 21, 22 erfassenden Gegengliedes (gemäß Fig. 5) verdeutlicht, dass die beiden Anlageplatten 21, 22 an einem T-förmigen Verbinder 31 gehalten sind und dessen Schenkel 32, 32' lösbar mit dem Kupplungsträger 10 verbunden sind (Fig. 3). Dabei wird deutlich, dass die beiden jeweils parallele Seitenwände aufweisenden Schenkel 32, 32' des T-Verbinders 31 im Bereich einer oberen Deckplatte 33 mit den beiden Anlageplatten 21, 22 verschweißt sein können. Zur Stabilisierung dieser Anlageplatten 21, 22 sind in zweckmäßiger Ausführung jeweilige Aussteifungsstreben 34, 34' vorgesehen. Damit wird eine optimal zu fertigende Konstruktion gezeigt, bei der für die Führungsglieder 19, 20 im Bereich der jeweiligen Führungsnut N eine Anlage- und Verdrehsicherung gebildet wird. Das vorbeschriebene Konzept kann auch weitere Abwandlungen aufweisen, wobei beispielsweise die Anlageplatten 21, 22 und/oder die Führungsglieder 19, 20 einzeln oder gemeinsam auswechselbar sein können. In der dargestellten Ausführung (Fig. 3) wird deutlich, dass im Bereich eines Aufnahmerohres 35 des teleskopisch ausgeführten Kupplungsträgers 10 die beiden Loslager 8, 9 gebildet sind.

Mit der Anwendung des erfindungsgemäßen Profilträgers 4 ist auch eine Gestaltung im Bereich der Kupplungspunkte K, K' denkbar, bei der im Bereich der Loslager jeweilige Kipp-, Schub- und/oder Hubbewegungen durch jeweilige elastische Verformungsmöglichkeiten im Bereich der zusammenwirkenden Bauteile aufnehmbar sind. Auch durch den Einsatz unterschiedlicher Materialkombinationen können sich weitere Optimierungsmöglichkeiten eröffnen, um die optimale Führung des Anhängers 1 im angekoppelten Zustand zu gewährleisten.

Mit der Anwendung des erfindungsgemäßen Profilträgers 4 wird die konstruktive Gestaltung des Anhängers 1 im Bereich seines Basis-Rahmens 7 so gestaltbar, dass mit nur einem im Bereich der Längsmittelachse M abgestützten Rad R eine problemlos mitführbare Anbaugruppe erreicht wird. In der dargestellten Ausführung sind zwei Räder R, R' jeweils einzeln im Bereich der Längs- bzw. Querstreben des Rahmens 7 abgestützt, wobei eine die Rollachse 36 vorgebende Stützvorrichtung 37 vorgesehen ist. Gleichzeitig wird dabei eine jeweilige vertikale Schwenkachse H für die Räder definiert.

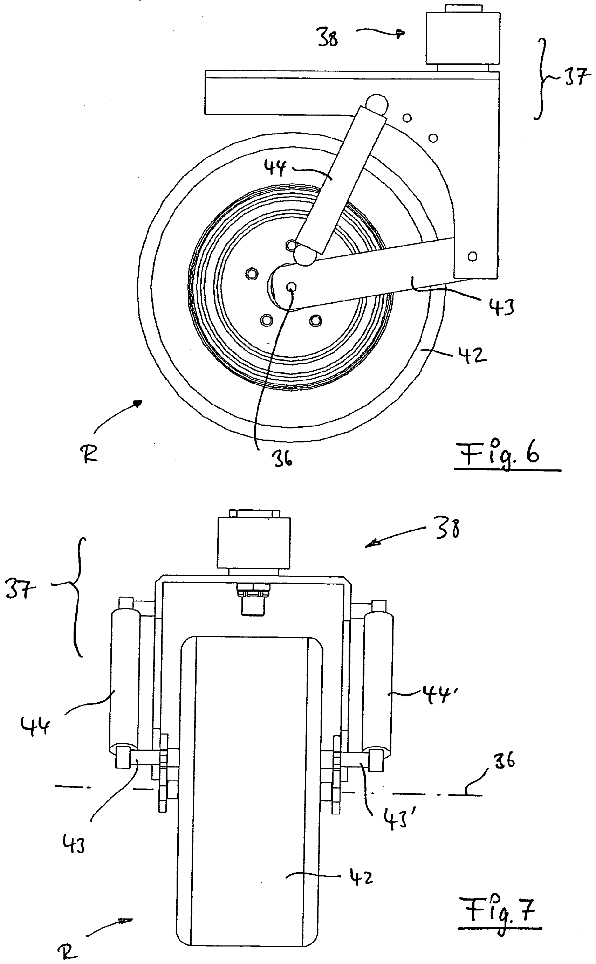

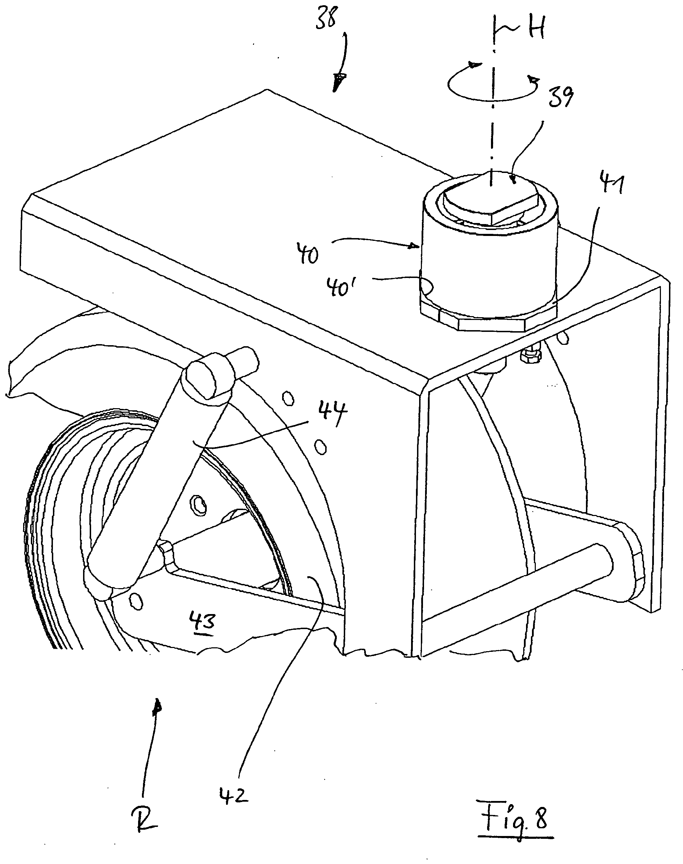

In Fig. 6 bis Fig. 8 ist die konstruktive Gestaltung der Stützbauteile im Bereich der im wesentlichen gleichen Räder R, R' (Fig. 1) näher veranschaulicht. Um die 360°-Schwenkbarkeit der Räder R um die vertikale Hochachse H zu ermöglichen, ist eine insgesamt mit 38 bezeichnete Lagerbaugruppe vorgesehen. Diese weist eine vertikale Tragachse 39 auf, die von einer Bremshülse 40 umgeben ist. Diese Bremshülse 40 wirkt am unteren Stirnende 40' mit einem Bremsbelag 41 zusammen, so dass bei einer Entlastung des Rades R, R' bei einer Kurvenfahrt die Drehbewegung um die Hochachse H gebremst werden kann. Vorteilhaft sind dabei die Räder R, R' mit Breitreifen 42 versehen, so dass die Fahrstabilität verbessert ist. Über eine Schwinge 43, 43' und einen Dämpfer 44, 44' ist die Stützkonstruktion insgesamt gefedert.

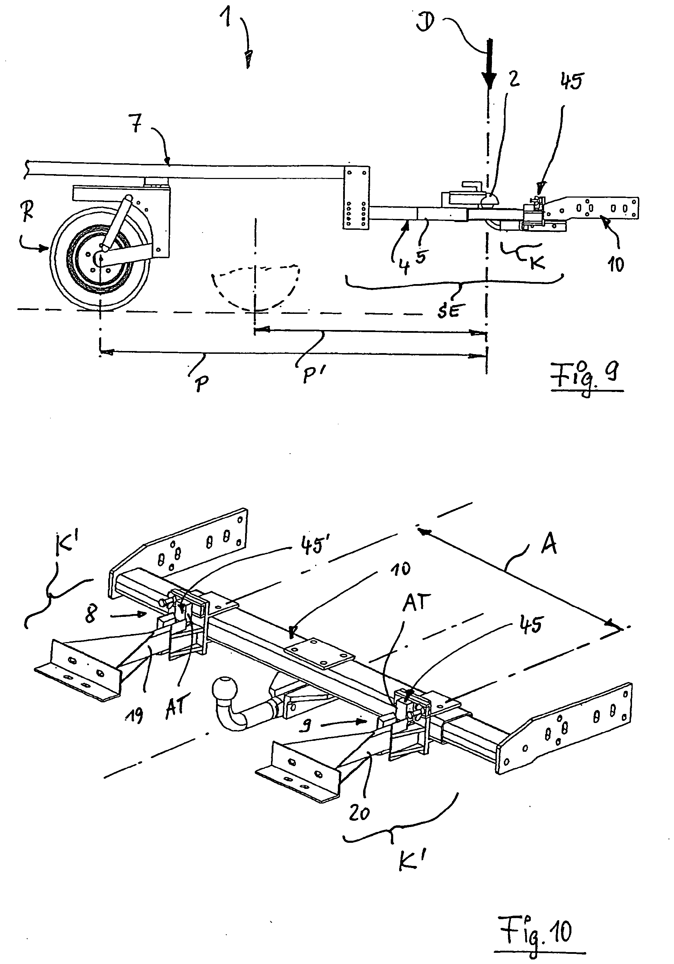

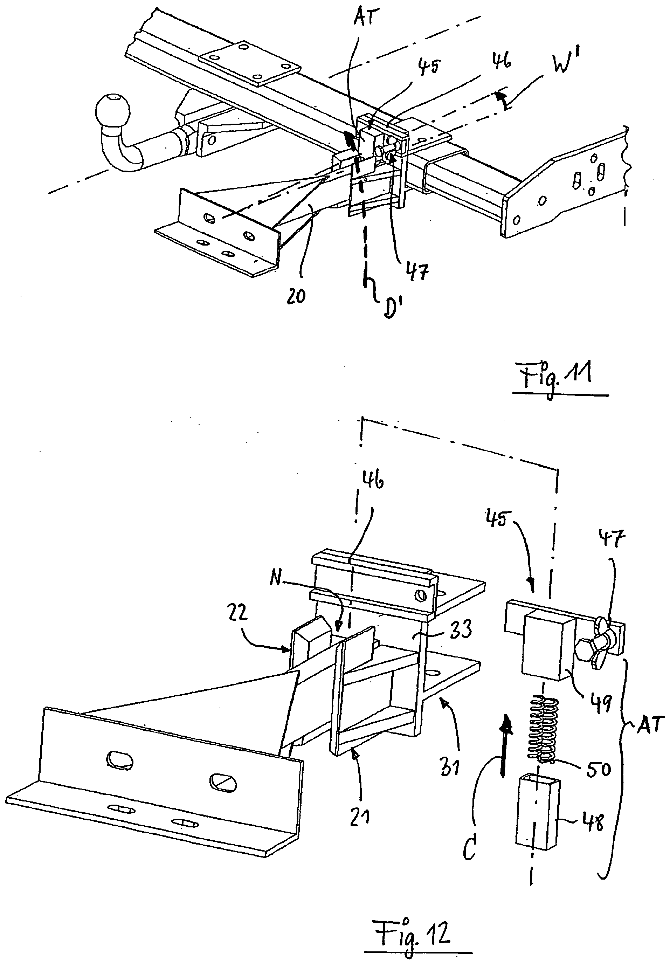

In Fig. 9 bis 12 ist eine Weiterbildung der Konstruktion im Bereich der Kupplungspunkte K, K' (Fig. 10) dargestellt, wobei im Bereich der Loslager 8, 9 als zusätzliches Bauelement ein jeweiliges Anlageteil 45, 45' als zusätzlicher Schwenkschutz vorgesehen ist. Dieses auch nur an einem der Loslager 8 oder 9 denkbare Anlageteil 45 wird so in das System integriert, dass zumindest einer der verbleibenden zwei Freiheitsgrade - nämlich die Bewegungsmöglichkeit in Schwenkrichtung W' (Fig. 11)-zumindest bereichsweise eingeschränkt wird. Es versteht sich, dass diese Konstruktion mit Bewegungseinschränkung bzw. -begrenzung auch eine Ausführung mit einem entgegen der Schwenkrichtung W' wirkenden Anlageteil aufweisen kann (nicht dargestellt). Auch die Verlagerungsmöglichkeit der Führungsglieder 19, 20 in bzw. entgegen der Fahrtrichtung F könnte durch ein nicht näher dargestelltes Anlageteil einstellbar bzw. begrenzt ausgeführt sein. Mit dieser konstruktiven Anpassung wird erreicht, dass bei Anwendung der Baueinheit mit dem einen oder mehreren Kugelköpfen 3 eine Begrenzung der Bewegung nach oben - insbesondere in Form eines "Hochschlagens" - im Bereich der Deichsel-Baugruppe vermieden ist und Kippmomente des Anhängers 1 ohne ungewollte Schrägstellungen, insbesondere bei Rückwärtsfahrt, sicher aufgenommen werden.

Das als Schwenkschutz wirkende Anlageteil 45, 45' ist dabei als eine einstellbare Baugruppe ausgebildet, die vorzugsweise lösbar im Bereich des Querträgers 10 anzubringen ist und damit optional installiert werden kann. In Fig. 10 ist die bevorzugte Einbaulage des Anlageteils 45, 45' dargestellt, wobei die Detaildarstellung gemäß Fig. 11 bzw. 12 eine zusätzliche Tragschiene 46 zeigt, an der das Anlageteil 45 mittels einer Schraubverbindung 47 festlegbar ist. Aus der Explosivdarstellung gemäß Fig. 12 wird deutlich, dass das Anlageteil 45 eine "elastische Baugruppe" für das anschlagende Führungsglied 20 bilden kann. In der dargestellten Ausführung ist ein Anschlagbolzen 48 in einer entsprechenden Aufnahmehülse 49 mittels jeweiliger Druckfedern 50 abgestützt, so dass in einer der Schwenkrichtung W' entsprechenden Druckrichtung C eine "federnde" Krafteinleitung gewährleistet ist. Denkbar ist auch, das Anlageteil 45 - beispielsweise mittels eines Gummi-Puffers o. dgl. Bauteile - insgesamt elastisch auszubilden (nicht dargestellt) oder mehrere der "dämpfenden" Anlageteile 45 im Nahbereich des Führungsgliedes 20 bzw. der Nut N vorzusehen.

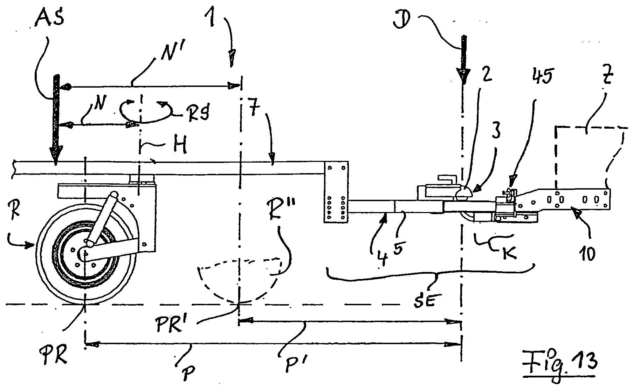

Aus Fig. 13 wird in Zusammenschau mit Fig. 1 eine zweite Ausführung des Anhängers 1 deutlich. Dabei wirkt die zwischen Zugfahrzeug Z und Anhänger 1 vorgesehene und auch ohne das Zwischenglied SE direkt mit dem Basis-Rahmen 7 (beispielsweise bei 12) verbindbare Deichsel-Verbindungsbaugruppe in der angekoppelten Benutzungslage (Fig. 13) über den Basis-Rahmen 7 mit dem zumindest einen - um eine vertikale Hochachse H drehbaren - Stützrad R, R' als geführte Einheit zusammen. In einer vorteilhaften Ergänzung derartiger bisher bekannter Deichsel-Verbindungen 3 (Deichsel- bzw. Anhänger-Last: D) wird der zusätzliche Schwenkschutz 45 in das System integriert, so dass bei einer - zuminderst phasenweise eine Drehung gemäß Pfeil RS des Stützrades R, R' bewirkenden - Rückwärtsfahrt des Anhängers 1 dieser zusätzlich zumindest gegen ein Hochschwenken (Winkel W', Fig. 11) gesichert ist.

Es hat sich gezeigt, dass bei einer Einleitung einer Rückwärtsfahrt des Anhängers 1 zumindest phasenweise die Drehung RS des zumindest einen Stützrades R, R' erfolgt und dabei eine mit R" in Fig. 2 angedeutete Fahrlage erreicht wird. Aus dieser Position resultiert auch eine Verlagerung des Anhängerschwerpunktes AS (Fig. 13) relativ zum jeweiligen Rollpunkt PR zum neuen Rollpunkt PR' hin, derart, dass entsprechend den Gewichts- und Hebelverhältnissen das zusätzliche Kippmoment W' auftreten kann. Diese Situation wird nunmehr durch den zusätzlichen Schwenkschutz 45 ausgeglichen, so dass auch an sich bekannte Deichsel-Verbinder mit Ösen oder Steckern durch diese zusätzliche Sicherungs-Baugruppe ergänzt werden können.

Aus der Gesamtschau der als Beispiel (Fig. 10 bis Fig. 12) gezeigten Bauteile in Verbindung mit dem Prinzipbild gemäß Fig. 13 wird deutlich, dass das aus der Verlagerung des Anhängerschwerpunktes AS resultierende Kippmoment W' in den Fahrzeugrahmen 10 eingeleitet wird. In dieser Stütz- und Fahrphase, in der das Stützrad die Position R" einnimmt, wird nunmehr die über einen verlängerten Hebel N' wirkende Stützlast AS (Abstands- bzw. Hebeländerung: von N nach N') mittels der zusätzlichen Anlage (bei 45) in den Fahrzeugrahmen 10 eingeleitet und ein "Abkippen" des Basis-Rahmens 7 nach hinten ist damit vermieden.

In der dargestellten Ausführungsform des Anhängers 1 ist dessen Deichsel-Verbindung 3 (Fig. 10 bis Fig. 12) so ausgeführt, dass diese zwei beidseits der Längsmittelebene M in einem Querabstand A voneinander angeordnete Kupplungspunkte K, K' aufweist und in deren Bereich jeweils ein Schwenkschutz 45 vorgesehen ist. Dabei ist vorgesehen, dass die beiden Kupplungspunkte K, K' mit jeweiligen Loslagern 8, 9 ausgeführt sind und in deren unmittelbarem Bereich der Schwenkschutz 45 (Fig. 12) vorgesehen ist. Diese mit den jeweiligen seitlichen Anlageplatten 21, 22 versehenen Loslager 8, 9 sind so konzipiert, dass zum Kraftfahrzeug Z hin eine Anschlagsicherung quer zur Fahrtrichtung (entspricht der Längsmittelebene M) gebildet ist. Aus Fig. 11 wird deutlich, dass der zusätzliche "vertikale" Schwenkschutz 45 von einem konstruktiv variabel ausführbaren Anlageteil AT im unmittelbaren Nahbereich der Loslager-Bauteile gebildet ist.

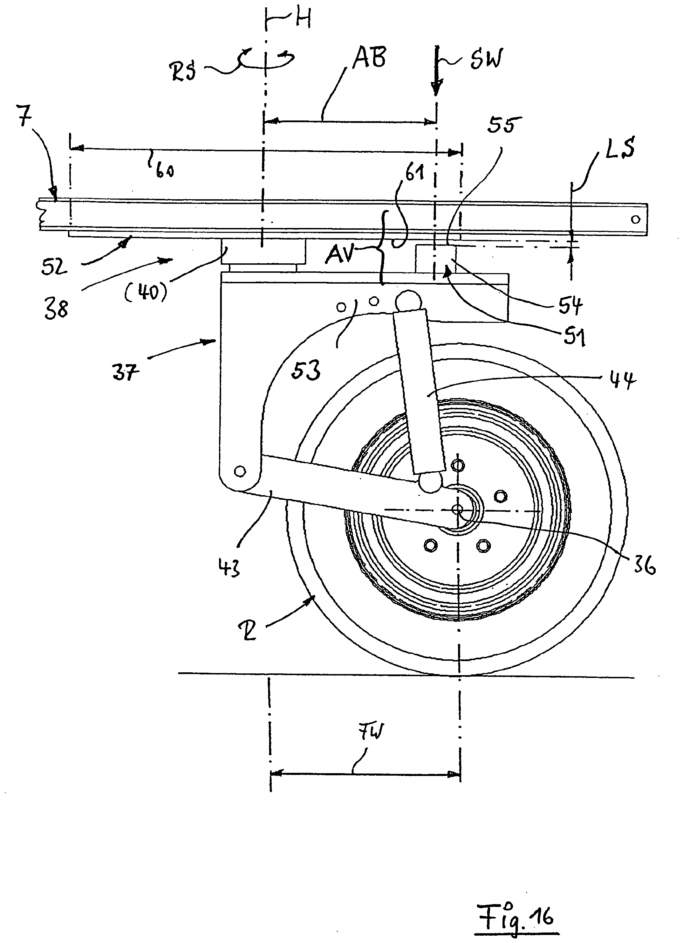

Die konstruktive Weiterbildung der Rad-Stützeinheit (Fig. 1) sieht bei einer dritten Ausführung des Anhängers 1 vor, dass die Stützvorrichtung 37 (Fig. 6 bis Fig. 8) - im Abstand AB zur das Stützlager 38 definierenden Schwenkachse H, H' - nunmehr zusätzlich zumindest eine mit dem Basis-Rahmen 7 "phasenweise" zusammenwirkende Anlageverbindung AV (Fig. 16) aufweist. Die vergrößerte Einzeldarstellung gemäß Fig. 16 verdeutlicht, dass die im wesentlichen zweiteilige Anlageverbindung AV von einem an der Stützvorrichtung 37 vorgesehenen Anpressteil 51 und einem im Bereich des Basis-Rahmens 7 vorgesehenen Gegenglied 52 gebildet ist. Ebenso ist denkbar, dass im Bereich der Stützvorrichtung 37 mehrere eine jeweilige Anlageverbindung AV bildende Pressteil-Gegenglied-Baugruppen vorgesehen sind (nicht dargestellt).

Aus der "unbelasteten" dargestellten Fahrlage des Anhängers 1 (gemäß Fig. 16) wird deutlich, dass die Anlageverbindung AV zumindest bei gering bzw. unbeladenem Anhänger 1 als eine lösbare Verbindung wirksam ist. Diese ein freies Drehen (Pfeil RS) der Räder R, R' ermöglichende Freilauf-Phase wird dadurch deutlich, dass zwischen Gegenglied 52 und Anpressteil 51 ein Luftspalt LS gebildet ist.

Der prinzipielle Aufbau einer derartigen Anlageverbindung AV sieht vor, dass diese auch mit mehreren Anpressteilen und/oder mehreren Gegengliedem (nicht dargestellt) versehen sein kann. Ebenso ist denkbar, dass für die jeweiligen Ausführungen von Anpressteil 51 und Gegenglied 52 unterschiedliche Materialien eingesetzt werden können. In bevorzugter Ausführung ist vorgesehen, dass das Anpressteil 51 als ein im wesentlichen elastisches Dämpfungselement ausgebildet wird und dieses mit einem weitgehend "starren" Gegenglied reibschlüssig so zusammenwirkt, dass bei geringem Reibwiderstand eine optimale Stützwirkung (Pfeil SW) erreicht ist. Diese Stützwirkung ist über den Radius 59 bzw. den Durchmesser 60 des Gegengliedes 52 gewährleistet.

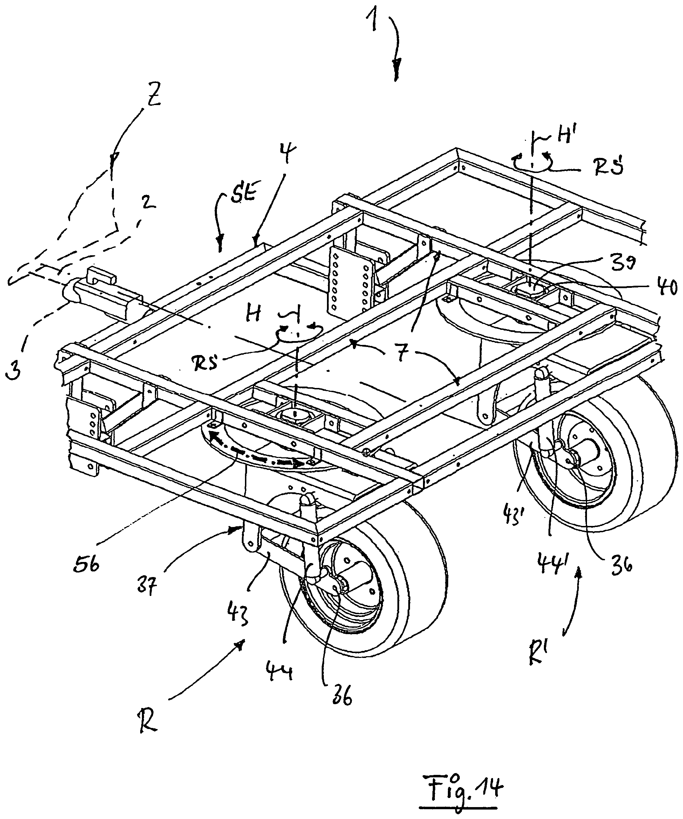

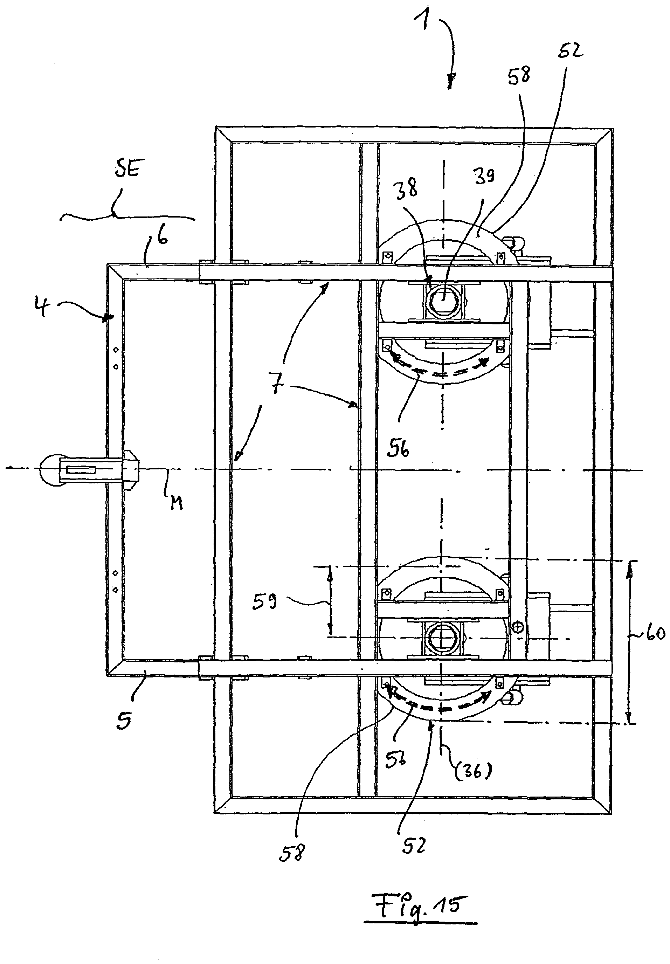

In konstruktiv einfachster Ausführung ist vorgesehen, dass das Anpressteil 51 als ein im Abstand AB zur Schwenkachse H, H' an einem Tragschenkel 53 der Stützvorrichtung 37 festlegbarer Zylinderkörper 54 vorgesehen ist und dessen freie Stirnseite 55 an dem eine Stützbahn 56 (Fig. 14, Fig. 15) definierenden Gegenglied 52 anlegbar ist. Es versteht sich, dass der Zylinderkörper 54 mit seiner Stirnseite 55 auch bei radialer Verlagerung um die Schwenkachse (Pfeil RS) am Gegenglied 52 an dessen Unterseite 61 reibschlüssig anlegbar ist.

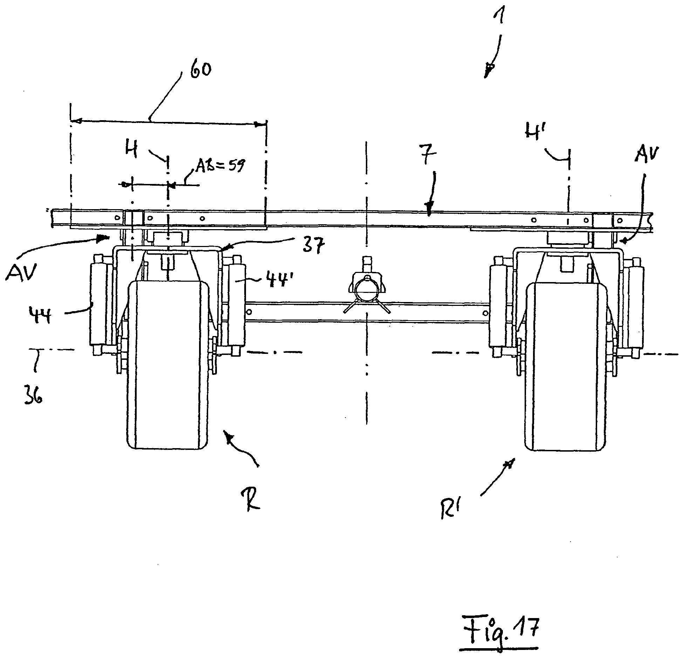

Aus der Zusammenschau von Fig. 14 bis Fig. 17 wird deutlich, dass das Gegenglied 52 in bevorzugter Ausführung als eine Ringplatte 58 ausgebildet ist, so dass über einen Schwenkweg RS von 360° eine jeweilige Anlage- bzw. Abstandsposition erreichbar ist.

Ebenso ist denkbar, dass das Gegenglied 52 als ein Ringabschnitt (nicht dargestellt) geformt ist, so dass die Bewegungsbahn 56 auf die Länge dieses Abschnittes zu beschränken ist. Unabhängig von der jeweiligen Ausführung dieses Gegengliedes 52 ist denkbar, dass im Bereich der Anlageverbindung AV ein die radiale Bewegungsbahn 56 des Anpressteils 51 begrenzender Anschlag (nicht dargestellt) vorgesehen sein kann.

## Patentansprüche

1. Einachsiger Anhänger für einen Kraftwagen o. dgl. Zugfahrzeug (Z), das zumindest einen Kugelkopf (2) mit Kugelkupplung (3) als zumindest eine Verbindungsbaugruppe aufweist, wobei der Anhänger (1) im Bereich eines Basis-Rahmens (7) zumindest eine ein Stützrad (R, R') aufnehmende und um eine vertikale Schwenkachse (H, H') verlagerbare Stützvorrichtung (37) aufweist und der Anhänger (1) an der Verbindungsbaugruppe mittels eines Zwischengliedes (SE) festlegbar ist und dieses zusätzlich zwei beidseits der Längsmittelebene (M) des Anhängers (1) in einem Querabstand (A) voneinander angeordnete Kupplungspunkte (K, K') aufweist, **dadurch gekennzeichnet, dass** als Zwischenglied (SE) ein einerseits mit zwei parallelen Halteschenkeln (5, 6) zum Basis-Rahmen (7) des Anhängers (1) geführter, an jeweiligen Längs- und/oder Querstreben (11, 12) des Basis-Rahmens (7) mittels jeweiliger Steck- und/oder Schraubverbinder (13, 14) angreifender und andererseits die beiden Kupplungspunkte (K, K') mit Loslagern (8, 9) bildender Profilträger (4) vorgesehen ist, wobei der Profilträger (4) im Bereich der beiden Loslager (8, 9) mit jeweils einem stangenförmigen Führungsglied (19, 20) versehen ist, das mit einem Gegenglied zusammenwirkt, das an einem Zugfahrzeug (Z) bzw. dessen Kupplungsträger (10) vorsehbar ist, derart, dass der Verbindungsbereich des stangenförmigen Führungsgliedes eine nach Art einer Nut-Führung bewegliche Abstützung definiert, so dass zusätzlich zur im Bereich der Verbindungsbaugruppe(n) (3) erfolgenden Zugkraft- und Bewegungseinleitung (F) jeweilige Schwenk-, Schub- und/oder Hubbewegungen (W, S, B) im Bereich der Loslager (8, 9) aufnehmbar sind.

2. Anhänger nach Anspruch 1, **dadurch gekennzeichnet, dass** mittels der beiden zwischen dem Profilträger (4) sowie dem Fahrzeugrahmen (10) vorgesehenen Loslager (8, 9) für den einachsigen Anhänger (1) zum Kraftfahrzeug (Z) hin eine Anschlagsicherung gebildet ist.

3. Anhänger nach Anspruch 1 oder 2, **dadurch gekennzeichnet, dass** der Basis-Rahmen (7) mit dem als ein Montage-Set bereitstellbaren Profilträger (4) sowie den Loslager-Baugruppen eine das Gewicht des Anhänger-Systems (1) gering haltende Leichtbaugruppe bildet.

4. Anhänger nach einem der Ansprüche 1 bis 3, **dadurch gekennzeichnet, dass** die beidseits mit gleicher Länge (L) parallel zur Längsmittelebene (M) verlaufenden Führungsglieder (19, 20) jeweils zwischen zwei eine offene Führungsnut (N) begrenzenden Anlageplatten (21, 22) des Gegengliedes verlagerbar sind.

5. Anhänger nach einem der Ansprüche 1 bis 4, **dadurch gekennzeichnet, dass** die Führungsglieder (19, 20) jeweils als Vierkantprofile ausgebildet sind, von denen jeweils zwei parallele Seitenflächen (23, 24) an den Anlageplatten (21, 22) des Gegengliedes gleitend anlegbar sind.

6. Anhänger nach einem der Ansprüche 1 bis 5, **dadurch gekennzeichnet, dass** die Führungsglieder (19, 20) mit jeweiligen zum Profilträger (4) gerichteten Verbindungsplatten (26, 27) versehen sind.

7. Anhänger nach Anspruch 6, **dadurch gekennzeichnet, dass** die die Führungsglieder erfassenden Verbindungsplatten (26, 27) lösbar am Profilträger (4) gehalten sind.

8. Anhänger nach Anspruch 7, **dadurch gekennzeichnet, dass** zwischen den Verbindungsplatten (26, 27) und dem Profilträger (4) ein Haltewinkel (29) vorgesehen ist.

9. Anhänger nach einem der Ansprüche 4 bis 8, **dadurch gekennzeichnet, dass** die jeweils das Führungsglied (19, 20) erfassenden Anlageplatten (21, 22) an einem T-förmigen Verbinder (31) gehalten sind und dessen Schenkel (32, 32') lösbar mit dem Kupplungsträger (10) verbunden ist.

10. Anhänger nach Anspruch 9, **dadurch gekennzeichnet, dass** der zwei parallele Seitenwände aufweisende Schenkel (32, 32') des T-Verbinders (31) im Bereich einer oberen Deckplatte (33) mit den beiden Anlageplatten (21, 22) verschweißt ist.

11. Anhänger nach einem der Ansprüche 4 bis 10, **dadurch gekennzeichnet, dass** die Anlageplatten (21, 22) jeweils zumindest eine rückseitige Aussteifungsstrebe (34, 34') aufweisen.

12. Anhänger nach einem der Ansprüche 1 bis 11, **dadurch gekennzeichnet, dass** die Führungsglieder (19, 20) mit dem Bereich der Führungsnut (N) eine Verdrehsicherung bilden.

13. Anhänger nach einem der Ansprüche 1 bis 12, **dadurch gekennzeichnet, dass** die Anlageplatten (21, 22) und/oder die stangenförmigen Führungsglieder (19, 20) mit einem Belag (25) versehen sind.

14. Anhänger nach einem der Ansprüche 1 bis 13, **dadurch gekennzeichnet, dass** die Anlageplatten (21, 22) und/oder die Führungsglieder (19, 20) einzeln auswechselbar sind.

15. Anhänger nach einem der Ansprüche 1 bis 14, **dadurch gekennzeichnet, dass** die beiden Loslager (8, 9) im Bereich eines teleskopischen Kupplungsträgers (10) vorgesehen sind.

16. Anhänger nach einem der Ansprüche 1 bis 15, **dadurch gekennzeichnet, dass** im Bereich der Loslager (8, 9) jeweilige Kipp-, Schub- und/oder Hubbewegungen durch elastische Verformung aufnehmbar sind.

17. Anhänger nach einem der Ansprüche 1 bis 16, **dadurch gekennzeichnet, dass** im Bereich zumindest eines der Loslager (8, 9) zumindest ein dessen Freiheitsgrad(e) (B, S, W) bereichsweise einschränkendes Anlageteil (45) vorgesehen ist.

18. Anhänger nach Anspruch 17, **dadurch gekennzeichnet, dass** im Bereich beider Loslager (8, 9) eines der Anlageteile (45, 45') vorgesehen ist.

19. Anhänger nach Anspruch 17 oder 18, **dadurch gekennzeichnet, dass** mit den Anlageteilen (45, 45') ein variabler Anlageweg vorgebbar ist.

20. Anhänger nach einem der Ansprüche 17 bis 19, **dadurch gekennzeichnet, dass** als das Anlageteil (45, 45') eine lösbar am Querträger (10) gehaltene Baugruppe vorgesehen ist.

21. Anhänger nach einem der Ansprüche 17 bis 20, **dadurch gekennzeichnet, dass** in die Baugruppe des Anlageteils (45, 45') ein Anschlagbolzen (48) o. dgl. verlagerbares Teil mit elastischer Wirkung integriert ist.

22. Einachsiger Anhänger für einen Kraftwagen o. dgl. Zugfahrzeug (Z) gemäß einem der Ansprüche 1 bis 21, **dadurch gekennzeichnet, dass** zumindest im Bereich der einen Kupplungs-Verbindung (3) ein zusätzlicher Schwenkschutz (45) vorgesehen ist, derart, dass bei einer eine Drehung des Stützrades (R, R') bewirkenden Rückwärtsfahrt des Anhängers (1) dieser zumindest gegen ein Hochschwenken (W') gesichert ist.

23. Anhänger nach Anspruch 22, **dadurch gekennzeichnet, dass** die Rückwärtsfahrt des Anhängers (1) zumindest phasenweise eine Drehung (RS) des zumindest einen Stützrades (R, R') bewirkt, dabei eine Verlagerung des Anhängerschwerpunktes (AS) relativ zum Rollpunkt (PR, PR') erfolgt und ein daraus resultierendes Kippmoment (W') mit dem zusätzlichen Schwenkschutz (45) aufnehmbar ist.

24. Anhänger nach Anspruch 22 oder 23, **dadurch gekennzeichnet, dass** das aus der Verlagerung des Anhängerschwerpunktes (AS) resultierende Kippmoment (W') in den Fahrzeugrahmen (10) einleitbar ist.

25. Anhänger nach einem der Ansprüche 22 bis 24, **dadurch gekennzeichnet, dass** der Anhänger (1) zusätzlich zur Deichsel-Verbindung (3) zwei beidseits der Längsmittelebene (M) des Anhängers (1) in einem Querabstand (A) voneinander angeordnete Kupplungspunkte (K, K') aufweist und in deren Bereich jeweils ein Schwenkschutz (45) vorgesehen ist.

26. Anhänger nach einem der Ansprüche 22 bis 25, **dadurch gekennzeichnet, dass** der Anhänger (1) als Zwischenglied (SE) den Profilträger (4) aufweist, wobei dieser einerseits mit den zwei parallelen Halteschenkeln (5, 6) zum Basis-Rahmen (7) des Anhängers (1) geführt ist, andererseits die beiden Kupplungspunkte (K, K') mit jeweiligem Loslager (8, 9) bildet und in deren Bereich mit dem Schwenkschutz (45) versehen ist.

27. Anhänger nach einem der Ansprüche 22 bis 26, **dadurch gekennzeichnet, dass** mittels der beiden zwischen dem Profilträger (4) sowie dem Fahrzeugrahmen (10) vorgesehenen Loslager (8, 9) für den einachsigen Anhänger (1) zum Kraftfahrzeug (Z) hin eine Anschlagsicherung quer zur Fahrtrichtung gebildet ist.

28. Anhänger nach einem der Ansprüche 22 bis 27, **dadurch gekennzeichnet, dass** der vertikale Schwenkschutz (45) von einem zusätzlichen Anlageteil (AT) im Bereich der Loslager (8, 9) gebildet ist.

29. Einachsiger Anhänger für einen Kraftwagen o. dgl. Zugfahrzeug (Z) gemäß einem der Ansprüche 1 bis 28, **dadurch gekennzeichnet, dass** die Stützvorrichtung (37) im Abstand (AB) zur ein Stützlager definierenden Schwenkachse (H, H') zumindest eine mit dem Basis-Rahmen (7) zusammenwirkende Anlageverbindung (AV) aufweist.

30. Anhänger nach Anspruch 29, **dadurch gekennzeichnet, dass** die im wesentlichen zweiteilige Anlageverbindung (AV) von einem an der Stützvorrichtung (37) vorgesehenen Anpressteil (51) und einem im Bereich des Basis-Rahmens (7) vorgesehenen Gegenglied (52) gebildet ist.

31. Anhänger nach Anspruch 29 oder 30, **dadurch gekennzeichnet, dass** die Anlageverbindung (AV) zumindest bei unbeladenem Anhänger (1) lösbar ist, derart, dass zwischen Gegenglied (52) und Anpressteil (51) ein Luftspalt (LS) gebildet ist.

32. Anhänger nach einem der Ansprüche 29 bis 31, **dadurch gekennzeichnet, dass** im Bereich der zumindest einen Anlageverbindung (AV) mehrere Anpressteile (51) und/oder mehrere Gegenglieder (52) vorgesehen sind.

33. Anhänger nach einem der Ansprüche 29 bis 32, **dadurch gekennzeichnet, dass** das zumindest eine Anpressteil (51) als ein im wesentlichen elastisches Dämpfungselement ausgebildet ist.

34. Anhänger nach einem der Ansprüche 29 bis 33, **dadurch gekennzeichnet, dass** das Anpressteil (51) als ein im Abstand (AB) zur Schwenkachse (H, H') an einem Tragschenkel (53) der Stützvorrichtung (37) festlegbarer Zylinderkörper (54) vorgesehen ist und dessen freie Stirnseite (55) an dem eine Stützbahn definierenden Gegenglied (52) anlegbar ist.

35. Anhänger nach einem der Ansprüche 29 bis 34, **dadurch gekennzeichnet, dass** der Zylinderkörper (54) bei radialer Verlagerung (RS) um die Schwenkachse (H, H') am Gegenglied (52) reibschlüssig anlegbar ist.

36. Anhänger nach Anspruch 35, **dadurch gekennzeichnet, dass** das Gegenglied (52) als eine Ringplatte (58) ausgebildet ist.

37. Anhänger nach Anspruch 36, **dadurch gekennzeichnet, dass** das Gegenglied (52) als ein Ringabschnitt geformt ist.

38. Anhänger nach einem der Ansprüche 29 bis 37, **dadurch gekennzeichnet, dass** im Bereich der Anlageverbindung (AV) ein die radiale Stützbahn des Anpressteils (51) begrenzender Anschlag vorgesehen ist.

## Claims

1. Single-axle trailer for a motor vehicle or similar towing vehicle (Z) that comprises at least one ball head (2) having a ball-shaped coupling (3) as at least one connection assembly, the trailer (1) in the region of a base frame (7) comprising at least one support apparatus (37) that accommodates a support wheel (R, R') and can be moved about a vertical swivel axis (H, H') and it being possible to secure the trailer (1) to the connection assembly by means of a connecting link (SE) and said connecting link additionally comprising two coupling points (K, K') arranged at a transverse distance (A) from one another on both sides of the central longitudinal plane (M) of the trailer (1), **characterised in that** a profiled support (4), which is directed at one end towards the base frame (7) of the trailer (1) by means of two parallel retaining limbs (5, 6), engages on respective longitudinal and/or transverse struts (11, 12) of the base frame (7) by means of respective plug and/or screw connectors (13, 14), and at the other end forms the two coupling points (K, K') having floating bearings (8, 9), is provided as the connecting link (SE), the profiled support (4) being provided, in the region of the two floating bearings (8, 9), with one rod-shaped guide member (19, 20) in each case, which guide member interacts with a counter member that can be provided on a towing vehicle (Z) or the coupling support (10) thereof such that the connection region of the rod-shaped guide member defines a rest that can move in the manner of a groove guide such that, in addition to the introduction of tensile force and motion (F) in the region of the connection assembly/assemblies (3), respective swiveling, translatory and/or lifting motions (W, S, B) can be absorbed in the region of the floating bearings (8, 9).

2. Trailer according to claim 1, **characterised in that** a stop securing means is formed for the single-axis trailer (1) towards the motor vehicle (Z) by means of the two floating bearings (8, 9) provided between the profiled support (4) and the vehicle frame (10).

3. Trailer according to either claim 1 or claim 2, **characterised in that** the base frame (7), together with the profiled support (4) that can be provided as an assembly kit and the floating bearing assemblies, forms a light-weight assembly that keeps the weight of the trailer system (1) low.

4. Trailer according to any of claims 1 to 3, **characterised in that** the guide members (19, 20) that have the same length (L) and extend on both sides in parallel with the central longitudinal plane (M) can each be moved between two bearing plates (21, 22) of the counter member, which plates delimit an open guide groove (N).

5. Trailer according to any of claims 1 to 4, **characterised in that** the guide members (19, 20) are each formed as square profiles, of which two parallel side faces (23, 24) can be slidingly placed on the bearing plates (21, 22) of the counter member in each case.

6. Trailer according to any of claims 1 to 5, **characterised in that** the guide members (19, 20) are provided with respective connection plates (26, 27) facing the profiled support (4).

7. Trailer according to claim 6, **characterised in that** the connection plates (26, 27) grasping the guide members are detachably held on the profiled support (4).

8. Trailer according to claim 7, **characterised in that** a mounting bracket (29) is provided between the connection plates (26, 27) and the profiled support (4).

9. Trailer according to any of claims 4 to 8, **characterised in that** the bearing plates (21, 22) grasping the guide member (19, 20) are in each case held on a T-shaped connector (31) and the limb (32, 32') thereof is detachably connected to the coupling support (10).

10. Trailer according to claim 9, **characterised in that** the limb (32, 32') of the T-connector (31) that comprises two parallel side walls is welded to the two bearing plates (21, 22) in the region of an upper cover plate (33).

11. Trailer according to any of claims 4 to 10, **characterised in that** the bearing plates (21, 22) each comprise at least one rear reinforcement strip (34, 34').

12. Trailer according to any of claims 1 to 11, **characterised in that** the guide members (19, 20), together with the region of the guide groove (N), form an anti-rotation means.

13. Trailer according to any of claims 1 to 12, **characterised in that** the bearing plates (21, 22) and/or the rod-shaped guide members (19, 20) are provided with a coating (25).

14. Trailer according to any of claims 1 to 13, **characterised in that** the bearing plates (21, 22) and/or the guide members (19, 20) can be exchanged individually.

15. Trailer according to any of claims 1 to 14, **characterised in that** the two floating bearings (8, 9) are provided in the region of a telescopic coupling support (10).

16. Trailer according to any of claims 1 to 15, **characterised in that** respective tilting, translatory and/or lifting motions can be absorbed in the region of the floating bearings (8, 9) by means of elastic deformation.

17. Trailer according to any of claims 1 to 16, **characterised in that**, in the region of at least one of the floating bearings (8, 9), at least one bearing part (45), which restricts the degree(s) of freedom (B, S, W) of said bearings in regions, is provided.

18. Trailer according to claim 17, **characterised in that** one of the bearing parts (45, 45') is provided in the region of the two floating bearings (8, 9).

19. Trailer according to either claim 17 or claim 18, **characterised in that** a variable bearing path can be provided by means of the bearing parts (45, 45').

20. Trailer according to any of claims 17 to 19, **characterised in that** an assembly held detachably on the transverse support (10) is provided as the bearing part (45, 45').

21. Trailer according to any of claims 17 to 20, **characterised in that** a stop bolt (48) or similar movable part is integrated in the assembly of the bearing part (45, 45') so as to have elastic action.

22. Single-axis trailer for a motor vehicle or similar towing vehicle (Z) according to any of claims 1 to 21, **characterised in that** an additional anti-swivel means (45) is provided at least in the region of the one coupling connection (3) such that during a backwards movement of the trailer (1) that causes the support wheel (R, R') to rotate, said trailer is prevented at least from swinging upwards (W').

23. Trailer according to claim 22, **characterised in that** the backwards movement of the trailer (1) causes, at least at times, a rotation (RS) of the at least one support wheel (R, R'), and in the process the centre of gravity (AS) of the trailer shifts relative to the rolling point (PR, PR') and a tilting moment (W') resulting therefrom can be absorbed by the additional anti-swivel means (45).

24. Trailer according to either claim 22 or claim 23, **characterised in that** the tilting moment (W') resulting from the shift in the centre of gravity (AS) of the trailer can be introduced into the vehicle frame (10).

25. Trailer according to any of claims 22 to 24, **characterised in that** the trailer (1), in addition to the drawbar connection (3), comprises two coupling points (K, K') arranged at a transverse distance (A) from one another on both sides of the central longitudinal plane (M) of the trailer (1), and in the region of which coupling points one anti-swivel means (45) is provided in each case.

26. Trailer according to any of claims 22 to 25, **characterised in that** the trailer (1) comprises the profiled support (4) as the connecting link (SE), said support being directed at one end towards the base frame (7) of the trailer (1) by means of two parallel retaining limbs (5, 6), and at the other end forming the two coupling points (K, K') having respective floating bearings (8, 9) and in the region thereof being provided with the anti-swivel means (45).

27. Trailer according to any of claims 22 to 26, **characterised in that** a stop securing means is formed for the single-axis trailer (1) towards the motor vehicle (Z) transversely to the direction of travel by means of the two floating bearings (8, 9) provided between the profiled support (4) and the vehicle frame (10).

28. Trailer according to any of claims 22 to 27, **characterised in that** the verticle anti-swivel means (45) of an additional bearing part (AT) is formed in the region of the floating bearings (8, 9).

29. Single-axis trailer for a motor vehicle or similar towing vehicle (Z) according to any of claims 1 to 28, **characterised in that** the support apparatus (37) comprises at least one bearing connection (AV) that interacts with the base frame (7) at a distance (AB) from the swivel axis (H, H') that defines a support bearing.

30. Trailer according to claim 29, **characterised in that** the substantially two-part bearing connection (AV) is formed by a pressing part (51) provided on the support apparatus (37) and a counter member (52) provided in the region of the base frame (7).

31. Trailer according to either claim 29 or claim 30, **characterised in that** the bearing connection (AV) is detachable at least when the trailer (1) is unloaded such that an air gap (LS) is formed between the counter member (52) and the pressing part (51).

32. Trailer according to any of claims 29 to 31, **characterised in that** a plurality of pressing parts (51) and/or a plurality of counter members (52) are provided in the region of the at least one bearing connection (AV).

33. Trailer according to any of claims 29 to 32, **characterised in that** the at least one pressing part (51) is formed as a substantially resilient damping element.

34. Trailer according to any of claims 29 to 33, **characterised in that** the pressing part (51) is provided as a cylinder body (54) that can be secured to a supporting limb (53) of the support apparatus (37) at a distance (AB) from the swivel axis (H, H') and the free end face (55) of said pressing part can be placed on the counter member (52) that defines a support track.

35. Trailer according to any of claims 29 to 34, **characterised in that** the cylinder body (54) can be frictionally placed on the counter member (52) when there is radial movement (RS) about the swivel axis (H, H').

36. Trailer according to claim 35, **characterised in that** the counter member (52) is designed as an annular plate (58).

37. Trailer according to claim 36, **characterised in that** the counter member (52) is formed as an annular portion.

38. Trailer according to any of claims 29 to 37, **characterised in that** a stop that delimits the radial support track of the pressing part (51) is provided in the region of the bearing -connection (AV).

## Revendications

1. Remorque à essieu unique destinée à un véhicule automobile ou à un véhicule de remorquage analogue (Z) qui comporte au moins une tête sphérique (2) munie d'un dispositif d'accouplement à rotule (3) se présentant sous la forme d'au moins un ensemble de liaison, la remorque (1) comportant au niveau d'un cadre de base (7) au moins un dispositif de support (37) qui reçoit une roue de support (R, R') et qui est mobile sur un axe de pivotement vertical (H, H') et la remorque (1) pouvant être fixé à l'ensemble de liaison au moyen d'un élément intermédiaire (SE) et ce dernier comportant en plus deux points d'accouplement (K, K') disposés des deux côtés du plan médian longitudinal (M) de la remorque (1) à une distance transversale (A) l'un de l'autre, **caractérisée en ce qu'**il est prévu comme élément intermédiaire (SE) un support profilé (4) qui d'une part est guidé par rapport au cadre de base (7) de la remorque (1) au moyen de deux branches de retenue parallèles (5, 6) et s'engage sur des montants longitudinaux et/ou transversaux respectifs (11, 12) du cadre de base (7) au moyen de connecteurs à enfichage et/ou vissage respectifs (13, 14) et qui d'autre part forme les deux points d'accouplement (K, K') munis de paliers libres (8, 9), le support profilé (4) étant pourvu au niveau de chacun des deux paliers libres (8, 9) d'un élément de guidage (19, 20) en forme de barre qui coopère avec un élément homologue qui peut être prévu au niveau d'un véhicule de remorquage (Z) ou de son support d'accouplement (10) de telle sorte que la zone de liaison de l'élément de guidage en forme de barre définit un appui mobile du type guidage à rainure de façon à pouvoir absorber au niveau des paliers libres (8, 9) des mouvements de pivotement, de poussée et/ou de levage (W, S, B) respectifs en plus de l'amorce d'un mouvement et d'une force de traction (F) se produisant au niveau du ou des ensembles de liaison (3) .

2. Remorque selon la revendication 1, **caractérisée en ce qu'**une butée de sécurité est formée pour la remorque à essieu unique (1) en direction du véhicule automobile (Z) au moyen des deux paliers libres (8, 9) prévus entre le support profilé (4) et le cadre de véhicule (10).

3. Remorque selon la revendication 1 ou 2, **caractérisée en ce que** le cadre de base (7} forme, avec le support profilé (4) réalisé sous la forme d'un ensemble de montage et avec les ensembles de paliers libres, un ensemble léger retenant faiblement le poids du système de remorque (1).

4. Remorque selon l'une des revendications 1 à 3, **caractérisée en ce que** les éléments de guidage (19, 20), s'étendant parallèlement au plan médian longitudinal (M) des deux côtés avec la même longueur (L), sont mobiles chacun entre deux plaques d'appui (21, 22) de l'élément homologue qui délimitent une rainure de guidage ouverte (N).

5. Remorque selon l'une des revendications 1 à 4, **caractérisée en ce que** les éléments de guidage (19, 20) sont chacun réalisés sous forme de profilés carrés, dont deux faces latérales parallèles (23, 24) peuvent venir en appui de manière coulissante sur les plaques d'appui (21, 22) de l'élément homologue.

6. Remorque selon l'une des revendications 1 à 5, **caractérisée en ce que** les éléments de guidage (19, 20) sont pourvus de plaques de liaison respectives (26, 27) dirigées vers le support profilé (4).

7. Remorque selon la revendication 6, **caractérisée en ce que** les plaques de liaison (26, 27) saisissant les éléments de guidage sont maintenues de manière amovible sur le support profilé (4).

8. Remorque selon la revendication 7, **caractérisée en ce qu'**un angle de retenue (29) est prévu entre les plaques de liaison (26, 27) et le support profilé (4).

9. Remorque selon l'une des revendications 4 à 8, **caractérisée en ce que** les plaques d'appui (21, 22) saisissant respectivement l'élément de guidage (19, 20) sont maintenues au niveau d'un connecteur (31) en forme de T et les branches (32, 32') dudit connecteur sont reliées de manière amovible au support d'accouplement 10).

10. Remorque selon la revendication 9, **caractérisée en ce que** la branche (32, 32') du connecteur en T (31), comportant deux parois latérales parallèles, est soudée aux deux plaques d'appui (21, 22) au niveau d'une plaque de recouvrement supérieure (33).

11. Remorque selon l'une des revendications 4 à 10, **caractérisée en ce que** les plaques d'appui (21, 22) comportent chacune au moins un montant de renforcement arrière (34, 34').

12. Remorque selon l'une des revendications 1 à 11, **caractérisée en ce que** les éléments de guidage (19, 20) forment avec la zone de la rainure de guidage (N) une sécurité anti-torsion.

13. Remorques selon l'une des revendications 1 à 12, **caractérisée en ce que** les plaques d'appui (21, 22) et/ou les éléments de guidage (19, 20) en forme de barre sont pourvus d'un revêtement (25).

14. Remorque selon l'une des revendications 1 à 13, **caractérisée en ce que** les plaques d'appui (21, 22) et/ou les éléments de guidage (19, 20) sont remplaçables individuellement.

15. Remorque selon l'une des revendications 1 à 14, **caractérisée en ce que** les deux paliers libres (8, 9) sont prévus au niveau d'un support d'accouplement télescopique (10).

16. Remorque selon l'une des revendications 1 à 15, **caractérisée en ce que** des mouvements de basculement, de poussée et/ou de levage sont absorbés par déformation élastique au niveau des paliers libres (8, 9).

17. Remorque selon l'une des revendications 1 à 16, **caractérisée en ce qu'**il est prévu au niveau d'au moins un des paliers libres (8, 9) au moins un élément d'appui (45) limitant partiellement le ou les degrés de liberté (B, S, W) de cet au moins un palier libre.

18. Remorque selon la revendication 17, **caractérisée en ce que** l'un des éléments d'appui (45, 45') est prévu au niveau des deux paliers libres (8, 9).

19. Remorque selon la revendication 17 ou 18, **caractérisée en ce qu'**un chemin d'appui variable peut être prédéterminé au moyen des éléments d'appui (45, 45').

20. Remorque selon l'une des revendications 17 à 19, **caractérisée en ce qu'**il est prévu comme élément d'appui (45, 45') un ensemble maintenu de manière amovible au niveau du montant transversal (10).

21. Remorque selon l'une des revendications 17 à 20, **caractérisée en ce qu'**une tige de butée (48) ou un élément mobile analogue à effet élastique est intégré dans l'ensemble de l'élément d'appui (45, 45').

22. Remorque à essieu unique destiné à un véhicule automobile ou un véhicule de remorquage analogue (Z) selon l'une des revendications 1 à 21, caractérisée en ce qu'une protection anti-pivotement supplémentaire (45) est prévue au moins au niveau de l'une des liaisons d'accouplement (3) de sorte que, lors du recul de la remorque (1) entraînant la rotation de la roue de support (R, R'), cette remorque est au moins empêchée d'effectuer un pivotement vers le haut (W').

23. Remorque selon la revendication 22, **caractérisée en ce que** le recul de la remorque (1) entraîne au moins par phase une rotation (RS) de l'au moins une roue de support (R, R'), **en ce qu'**un déplacement du centre de gravité (AS) de la remorque est alors effectué par rapport au point de roulement (PR, PR') et **en ce qu'**un moment de basculement résultant (W') peut être absorbé avec la protection anti-pivotement supplémentaire (45).

24. Remorque selon la revendication 22 ou 23, **caractérisée en ce que** le moment de basculement (W') résultant du déplacement du centre de gravité (AS) de la remorque est injecté dans le cadre de véhicule (10).

25. Remorque selon l'une des revendications 22 à 24, **caractérisée en ce que** la remorque (1) comporte, en plus de la liaison à timon (3), deux points d'accouplement (K, K') disposés des deux côtés du plan médian longitudinal (M) de la remorque (1) à une distance transversale (A) l'un de l'autre et une protection anti-pivotement (45) est prévue au moins au niveau de chacun d'eux.

26. Remorque selon l'une des revendications 22 à 25, **caractérisée en ce que** la remorque (1) comporte comme élément intermédiaire (SE) le support profilé (4), celui-ci étant d'une part guidé par rapport au cadre de base (7) de la remorque (1) au moyen des deux branches de retenue parallèles (5, 6) et formant d'autre part avec un palier libre respectif (8, 9) les deux points d'accouplement (K, K') et étant pourvu au niveau de ceux-ci de la protection anti-pivotement 45).

27. Remorque selon l'une des revendications 22 à 26, **caractérisée en ce qu'**une butée de sécurité est formée transversalement à la direction de déplacement pour la remorque à essieu unique (1) en direction du véhicule automobile (Z) au moyen des deux paliers libres (8, 9) prévus entre le support profilé (4) et le cadre de véhicule (10).

28. Remorque selon l'une des revendications 22 à 27, **caractérisée en ce que** la protection anti-pivotement verticale (45) est formée par un élément d'appui supplémentaire (AT) au niveau des paliers libres (8, 9).

29. Remorque à essieu unique destinée à un véhicule automobile ou un véhicule de remorquage analogue (Z) selon l'une des revendications 1 à 28, **caractérisée en ce que** le dispositif de support (37) comporte au moins une liaison d'appui (AV) coopérant avec le cadre de base (7) à la distance (AB) par rapport à un axe de pivotement (H, H') définissant un palier de support.

30. Remorque selon la revendication 29, **caractérisée en ce que** la liaison d'appui (AV), sensiblement en deux parties, est formée par un élément de pression (51) prévu au niveau du dispositif de support (37) et par un élément homologue (52) prévu au niveau du cadre de base (7).

31. Remorque selon la revendication 29 ou 30, **caractérisée en ce que** la liaison d'appui (AV) est amovible au moins lorsque la remorque (1) n'est pas chargée de sorte qu'un espace d'air (LS) est formé entre l'élément homologue (52) et l'élément de pression (51).

32. Remorque selon l'une des revendications 29 à 31, **caractérisée en ce que** plusieurs éléments de pression (51) et/ou plusieurs éléments homologues (52) sont prévus au niveau de l'au moins une liaison d'appui (AV).

33. Remorque selon l'une des revendications 29 à 32, **caractérisée en ce que** l'au moins un élément de pression (51) est conçu sous la forme d'un élément d'amortissement sensiblement élastique.

34. Remorque selon l'une des revendications 29 à 33, **caractérisée en ce que** l'élément de pression (51) est prévu sous la forme d'un corps cylindrique (54) qui peut être fixé à une branche de support (53) du dispositif de support (37) à la distance (AB) de l'axe de pivotement (H, H') et dont le côté frontal libre (55) peut venir en appui sur l'élément homologue (52) définissant une piste de support.

35. Remorque selon l'une des revendications 29 à 34, **caractérisée en ce que** le corps cylindrique (54) peut venir en appui par friction sur l'élément homologue 52) lors d'un déplacement radial (RS) autour de l'axe de pivotement (H, H').

36. Remorque selon la revendication 35, **caractérisée en ce que** l'élément homologue (52) est réalisé sous la forme d'une plaque annulaire (58).

37. Remorque selon la revendication 36, **caractérisée en ce que** l'élément homologue (52) est réalisé sous la forme d'une portion d'anneau.

38. Remorque selon l'une des revendications 29 à 37, **caractérisée en ce qu'**une butée limitant la piste de support radiale de l'élément de pression (51) est prévue au niveau de la liaison d'appui (AV).
